# EUROPEAN PATENT APPLICATION

(11) **EP 2 476 735 A1**
(43) Date of publication of application: **18.07.2012**
(21) Application number: 11275007.0
(22) Date of filing: 12.01.2011
(51) Int. Cl.: C09J 5/02

(54) **Method of outfitting a marine vessel**

(71) Applicant: BAE Systems PLC, London SW1Y 5AD (GB)
(72) Inventor: Holmes, Jonathan Edward Alexander, The Parade H M Naval base Portsmouth, PO1 3NB (GB); Bowers, Kevin John, The Parade H M Naval base Portsmouth, PO1 3NB (GB)
(74) Representative: BAE SYSTEMS plc Group IP Department

(57) **Abstract**

According to the invention there is provided a method of outfitting a marine vessel by attaching at least one fixture to a substrate surface disposed within the marine vessel including the steps of: pre-treating the substrate surface e.g. by sand-blasting to achieve a surface energy of 40 dyne or greater; applying an adhesive to the fixture; bringing the fixture into contact with the pre-treated substrate surface so that the adhesive adheres the fixture to the substrate surface.

## Description

This invention relates to a method of outfitting a marine vessel by attaching at least one fixture to a substrate surface disposed within the marine vessel, and also to marine vessels which have been outfitted in this manner. The invention is particularly, although not exclusively, concerned with naval ships or submarines, although the invention extends also (without limitation) to other sea and ocean going marine vessels having an essentially metallic hull construction and internal compartments.

Traditionally, marine vessel construction has utilised welding technologies throughout the process, including early and late stage outfitting. There is a very strong perception in this art that it is necessary to utilise welding technologies for these purposes.

The present invention overturns the perceived wisdom in the art, and can delivery many advantages, including time, cost and weight savings, amongst other advantages.

According to a first aspect of the invention there is provided a method of outfitting a marine vessel by attaching at least one fixture to a substrate surface disposed within the marine vessel including the steps of:
pre-treating the substrate surface to achieve a surface energy of 40 dyne or greater;
applying an adhesive to the fixture;
bringing the fixture into contact with the pre-treated substrate surface so that the adhesive adheres the fixture to the substrate surface.

The present invention introduces the concept of utilising suitable adhesives for marine vessel outfitting purposes whilst recognising that to achieve acceptable results, attention must be paid to the surface energy of the substrate surface, and bonding onto a painted surface should not be attempted. There are numerous advantages which can be associated with the invention, including reductions in man-hours and cost in comparison to traditional welding technologies. The present invention is safer than using welding equipment as there are fewer trip hazards associated with its implementation, no fire risk and reduced problems associated with manual handling. Furthermore, a clean working environment is maintained and it can be relatively easy to reposition fixtures if desired on certain substrates. Further advantages associated with the invention are described below.

The step of pre-treating the substrate surface may include abrading said substrate surface. The abraded substrate surface may then be cleaned with a solvent, a dispersant or an impregnated wipe. Advantageously, the step of pre-treating the substrate surface includes sandblasting said surface.

In other preferred embodiments, the step of pre-treating the substrate surface includes abrading said surface with an abrasive sheet material such as an abrasive cloth.

The present invention recognises that various substrate surfaces can be outfitted using adhesives, provided an appropriate pre-treatment is performed in order to achieve the desired surface energy. For example, in one embodiment the substrate is metal, and the substrate surface is painted with a paint which is removed by the step of pre-treating the substrate surface. In these embodiments, it is particularly preferred that the pre-treatment includes sand-blasting the substrate surface. Preferably a hard sand-blasting medium is used such as chilled iron grit in order to erode the thick paint layer in an acceptable manner. 60 grit chilled iron grit is particularly preferred.

Alternatively, the substrate may be a composite board material. Examples of composite board material include aluminium or plasterboard (RTM) based composite material. In the case of composite materials, the substrate surface may be a laminated surface finish. Examples of suitable composite board materials include Promarine (RTM) composite panels (Promat UK Ltd, Bracknell, UK) and Alucore (RTM) produced by 3A Composite GmbH (Singen, Germany). With these embodiments, it is particularly preferred that the pre-treatment includes abrading the surface with an abrasive sheet material.

The present inventors have conducted extensive testing of different adhesives in connection with the present invention, and have found that the selection of the adhesive is extremely important. Very preferably, the adhesive is a two part epoxy resin, such as an epoxy resin of the type sold by Henkel AG & Co. KGaA (Dusseldorf, Germany) and sold as Macroplast (RTM) EP3004/EP5004 hardener and resin (formerly known as E04).

Typically the method includes the further step of securing an object to the fixture. The object may be a cable tray or a light switch.

Preferably, the fixture includes a base plate, and a securing member upstanding from a first face of the base plate, wherein the adhesive is applied to a second, opposite face of the base plate. Advantageously, the base plate is non-perforated. This enables a sufficient degree of adhesion to be obtained. The securing member can be of any suitable form, such as a stud, a standoff or a cable securing member. Suitable fixtures having securing members can be obtained from Click Bond, Inc. (Carson City, Nevada, 89706-0713, USA).

Conveniently, the step of bringing the fixture into contact with the pre-treated substrate surface includes positioning a pressure applying arrangement such as a jigging fixture in contact with the feature. Suitable pressure applying arrangements in the form of a jigging fixture can be obtained from Click Bond, Inc.

The invention is particularly useful when performed at late stage outfitting of the marine vessel. This obviates any need to introduce heavy welding equipment into the environs of the marine vessel and does not require hot-work processes to be carried out at this stage.

According to a second aspect of the invention there is provided an outfitted marine vessel including at least one fixture attached to a substrate surface disposed within the marine vessel and an adhesive which adheres the fixture to the substrate surface; in which the substrate surface in contact with the adhesive has been pre-treated to achieve a surface energy of 40 dyne or greater.

Whilst the invention has been described above, it extends to any inventive combination of the features set out above, or in the following description, drawings or claims. For example, any features described in relation to the first aspect of the invention also form part of the second aspect of the invention and vice versa.

Embodiments of outfitted marine vessels and methods of outfitting a marine vessel in accordance with the invention will now be described with reference to the accompanying drawings, in which:-
Figure 1 shows perspective views of a number of fixtures;
Figure 2 depicts stages in a pre-treatment of a painted steel substrate;
Figure 3 shows a fixture on a substrate during setting of an adhesive; and
Figure 4 shows (a) a generally front perspective view and (b) a side perspective view of various items secured to the deck and bulkhead of a ship compartment in accordance with the invention.

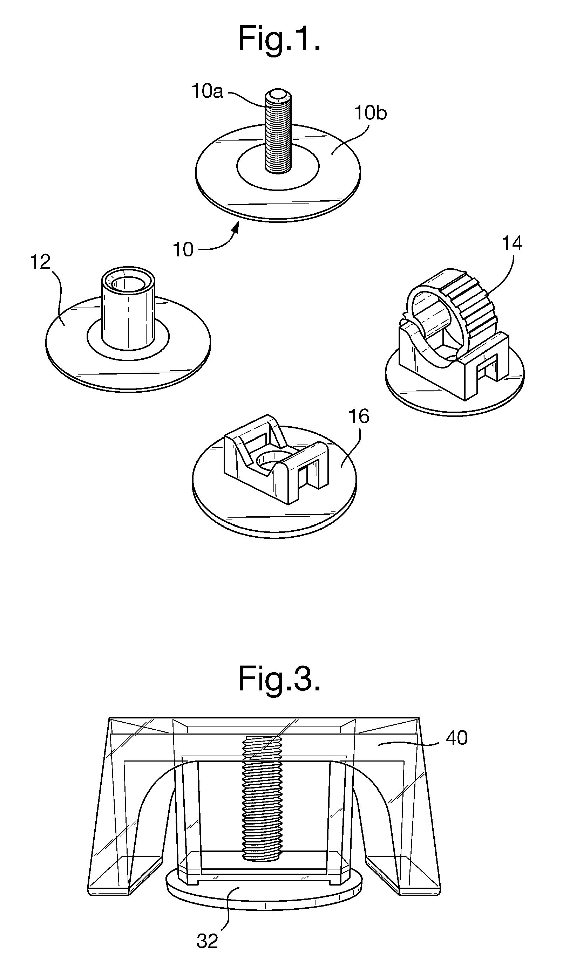

The invention relates to the use of adhesives to position fixtures during outfitting of a marine vessel, for example a ship, in a practical and convenient manner whilst providing sufficient strength and durability for practical use in a ship. Figure 1 shows a number of fixtures 10, 12, 14, 16 which are suitable for use in the present invention. All of the fixtures have a solid, non-perforated base plate such as the base plate 10b of fixture 10. The fixture 10 is a stud having a threaded portion upstanding from the base plate 10b. The fixture 12 is a standoff fixing, whilst fixtures 14 and 16 are cable fixings. Fixtures of the type shown in Figure 1 can be adhered to various locations within a ship as part of the outfitting process in order to provide various useful functions. It has been found that in order to provide a practical process with acceptable results in terms of joint strength and durability, attention should be given to the preparation of the surface to which the fixture is to be adhered. In particular, it has been found to be very important that the surface is given a pre-treatment which is sufficient to provide a surface energy of at least 40 dynes.

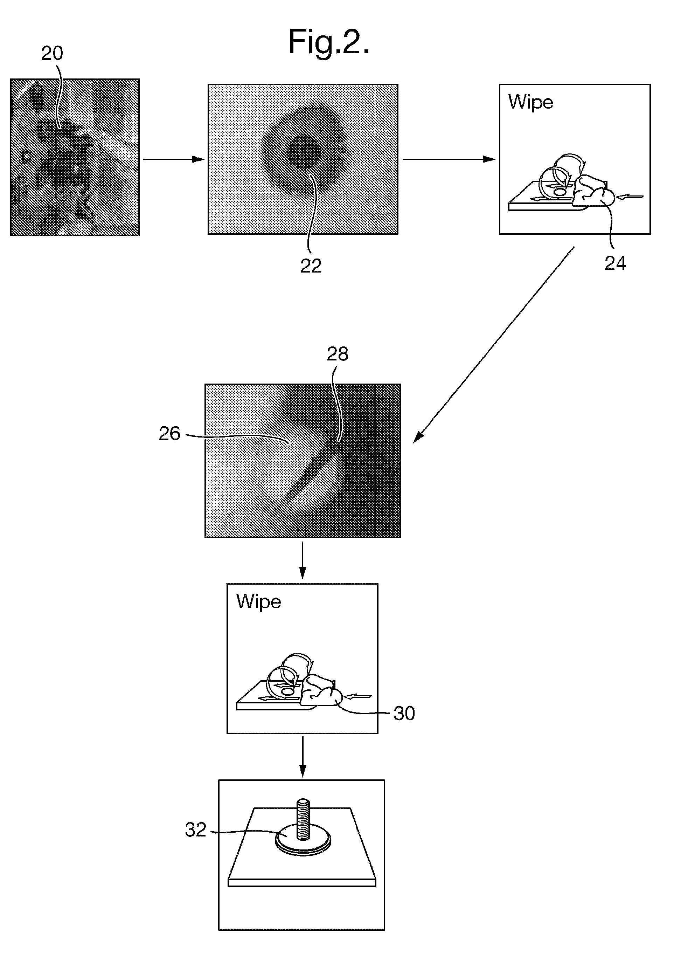

One of the commonly encountered surfaces within a ship where it is desirable to adhere a fixture thereon is a painted metal surface, typically painted steel. It is not acceptable to directly adhere the fixture onto the painted metal surface, and instead a surface preparation step is provided. Figure 2 depicts a preferred (although non-limiting) surface preparation technique for use in conjunction with painted metal surfaces. A sandblaster 20 is used to remove paint from the area in which it is desired to adhere the fixture. Additionally, surface roughness of the area of exposed metal may be increased through the sandblasting process. Preferably, 60 grit chilled iron grit is used. Figure 2 shows the exposed metal surface 22. Next, the exposed metallic surface is cleaned, for example using RST-5 Power Towel (RTM) wipes 24 (Chymera Limited, Kenilworth, UK.), which are impregnated with a dispersant. Other wipes might be used, and in fact a wipe containing acetone would be preferred on performance grounds as this finishes off the substrate better. However, health and safety legislation may affect the ability to use wipes containing acetone. Solvent might be used, but again health and safety considerations make this less preferred. The surface energy of the exposed metal area 26 is then tested using suitable means such as a dyne pen 28, following which the surface is again cleaned using, for example, RST-5 Power Towel (RTM) wipes 30. A fixture 32 is then adhered to the exposed metal 26 in a manner which will be described in more detail below. After the adhesive has set, the paint around the now secured fixture 32 can be "touched up".

Adhesive is applied to the underside of the base plate of the fixture 32 in an amount sufficient so that when the fixture 32 is applied to the exposed metal surface 26 a bead is formed around the periphery of the base portion. Figure 3 shows a preferred way of securing the fixture 32 to the exposed metal portion 26 whilst the adhesive is setting, which uses a pressure applying arrangement 40 in the form of a jigging fixture to apply pressure onto the fixture 32. Suitable fixtures 32 and pressure applying arrangements 40 can be obtained from Click Bond, Inc. Once the adhesive has set, the jigging fixture can be removed using pliers and then the paint around the secured fixture can be touched up.

It has been found that two part epoxy resin adhesives of the type having a hardener component and a resin component are particularly effective for use in the present invention. As well as providing excellent adhesion, epoxy resins of this type have excellent shelf life, do not require special conditions such as freezing before use, and provide an acceptable period of time after mixing before the mixed epoxy becomes too tacky for practical use. A particularly preferred epoxy resin product for use with the present invention is sold by Henkel AG & Co. KGaA under product code Macroplast (RTM) EP3004/EP5004. Other 2-K epoxy adhesives might be used. It has been found that adhesives of this type are clearly advantageous over other forms of adhesives such as acrylic adhesives, for example an acrylic adhesive sold by Click Bond, Inc. under product name CB200 which has a poor shelf life, a strong smell in a confined space and short working time.

Fixtures can be adhered to other substrates than painted metallic substrates. For example, fixtures can be adhered to a range of composite materials, including aluminium-based composite materials such as Alucore and plasterboard-based composite materials such as Promarine. It is known for bulkheads to be fabricated using materials of this type, and therefore the invention extends to marine vessel outfitting through the attachment of fixtures to composite bulkheads. The preferred pre-treatment of composite board substrates is different from the pre-treatment described above in relation to Figure 2. With composite board substrates, it is preferred to use an abrasive sheet material such as an abrasive cloth to abrade the surface of the composite board material. Suitable abrasive cloths are manufactured by 3M, Inc. (St. Paul, MN, USA) under the trade name Scotch-Brite (RTM). The abraded surface of the composite board material is then cleaned, for example using RST-5 Power Towel (RTM) wipes. A lint-free cloth can be used to wipe off excess RST-5 Power Towel (RTM) film. The surface energy of the abraded composite material is then tested using suitable means such as a dyne pen, following which the surface is again cleaned using, for example, RST-5 Power Towel (RTM) wipes to remove the residue from the dyne pen. A lint-free cloth may be used to wipe off excess RST-5 Power Towel (RTM) film. After this, the fixture is applied to the substrate in the manner described above in relation to Figures 2 and 3.

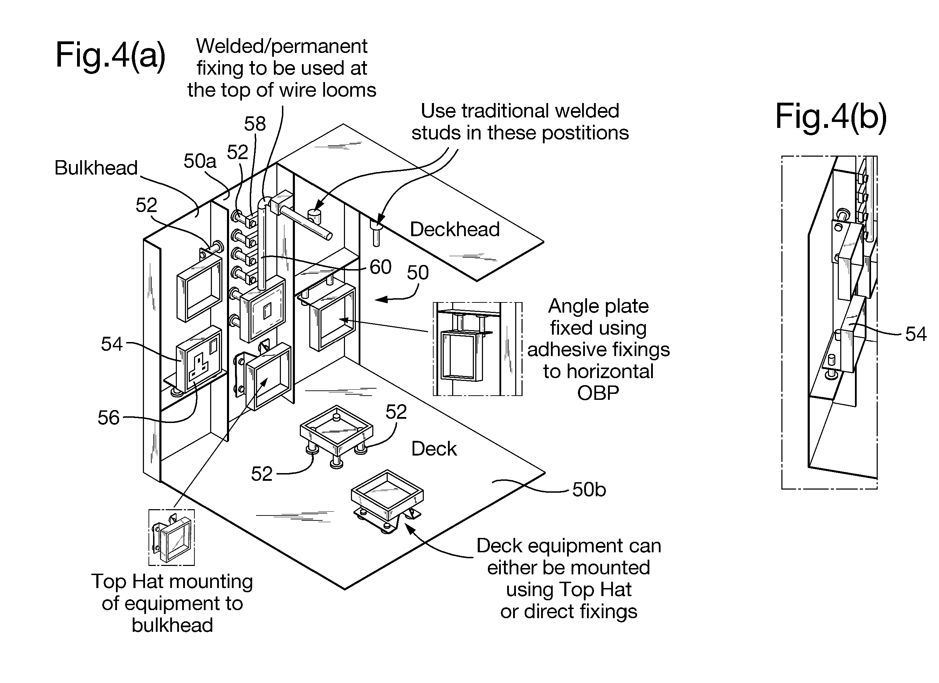

Fixtures can be adhered at various positions within a ship. In particular, fixtures can be adhered to the deck, bulkheads, vertical offset bull plates (OBP's) and the top surfaces of horizontal OBP's. It is not recommended that fixtures are adhered to ceilings or the undersides of horizontal OBP's, unless a false ceiling is positioned below the ceiling on which the fixture is adhered. This is due to safety considerations in the event of a fire. Figure 4 shows an uninsulated compartment, depicted generally at 50, having fixtures 52 adhered to various locations on the bulkhead 50a and the deck 50b. The fixtures 52 can be used to support various features such as an angle plate 54 which in turn can be used to house items such as an electrical socket 56, light switches or deck equipment. Many other items can be mounted, such as support plate 58 which can be used to support features such as a conduit 60 for electrical connections. Fixtures can be adhered to insulated compartments by using longer studs or by using extension studs, for example.

Safety considerations dictate that caution should be applied in the selection of the items to be mounted in accordance with the invention and in their placement. However, it is an advantageous feature of the invention that fire critical switches and equipment can be mounted to an insulated internal bulkhead, provided that the insulation is on the opposite side of the bulkhead to the side on which the fixtures are mounted. It has been found that with this configuration, the insulation results in a sufficiently reduced rate of heat conduction that failure of the adhesive fixing due to fire heat occurs over an extended time period. It is believed to be safe to mount fire critical switches and equipment using an adhesive in accordance with the invention onto an insulated steel bulkhead if the insulation is positioned on the opposite side of to the steel bulkhead to the adhesive fixing of the fixture.

## Claims

1. A method of outfitting a marine vessel by attaching at least one fixture to a substrate surface disposed within the marine vessel including the steps of:
pre-treating the substrate surface to achieve a surface energy of 40 dyne or greater;
applying an adhesive to the fixture;
bringing the fixture into contact with the pre-treated substrate surface so that the adhesive adheres the fixture to the substrate surface.

2. A method according to Claim 1 in which the step of pre-treating the substrate surface includes abrading said substrate surface.

3. A method according to Claim 2 in which the step of pre-treating the substrate surface includes sand-blasting said surface.

4. A method according to Claim 2 or Claim 3 in which the step of pre-treating the substrate surface includes abrading said surface with an abrasive sheet material.

5. A method according to any of Claims 1 to 4 in which the substrate is metal and the substrate surface is painted with a paint which is removed by the step of pre-treating the substrate surface.

6. A method according to any one of Claims 1 to 4 in which the substrate is a composite board material.

7. A method according to any preceding claim in which the adhesive is a two part epoxy resin.

8. A method according to any preceding claim including the further step of securing an object to the fixture.

9. A method according to Claim 8 in which the object is a cable tray or a light switch.

10. A method according to any preceding claim in which the fixture includes a base plate and a securing member upstanding from a first face of the base plate, wherein the adhesive is applied to a second, opposite face of the base plate.

11. A method according to Claim 10 in which the base plate is non-perforated.

12. A method according to Claim 10 or Claim 11 in which the securing member is a stud, a standoff or a cable securing member.

13. A method according to any preceding claim in which the step of bringing the fixture into contact with the pre-treated substrate surface includes positioning a pressure applying arrangement in contact with the fixture.

14. A method according to any preceding claim when performed at late stage outfitting of the marine vessel.

15. An outfitted marine vessel including at least one fixture attached to a substrate surface disposed within the marine vessel, and an adhesive which adheres the fixture to the substrate surface; in which the substrate surface in contact with the adhesive has been pre-treated to achieve a surface energy of 40 dyne or greater.
